# EUROPEAN PATENT SPECIFICATION

(11) **EP 3 677 353 B1**
(45) Date of publication and mention of the grant of the patent: **07.02.2024**
(21) Application number: 18849770.5
(22) Date of filing: 31.08.2018
(51) Int. Cl.: B21B 27/00, B22D 13/00, B22D 13/02, B22D 13/04, B32B 15/01, C22C 37/00, C22C 37/08, C22C 37/10

(54) **ROLLING COMPOSITE ROLL AND ITS PRODUCTION METHOD**
WALZENDE VERBUNDWALZE UND IHR HERSTELLUNGSVERFAHREN
ROULEAU COMPOSITE DE LAMINAGE ET SON PROCÉDÉ DE PRODUCTION

(30) Priority: 31.08.2017 JP 2017167313
(43) Date of publication of application: 08.07.2020
(73) Proprietor: Proterial, Ltd., Tokyo 135-0061 (JP)
(72) Inventor: NOZAKI, Yasunori, Kitakyusyu-shi Fukuoka 808-0023 (JP); ODA, Nozomu, Kitakyusyu-shi Fukuoka 808-0023 (JP); HATTORI, Toshiyuki, Kitakyusyu-shi Fukuoka 808-0023 (JP); FUKUMOTO, Shiho, Tokyo 108-8224 (JP)
(74) Representative: Diehl & Partner
(86) International application number: PCT/JP2018/032459
(87) International publication number: WO 2019/045068

(56) References cited:
- EP-A1- 2 740 552
- EP-A1- 3 050 636
- WO-A1-2015/045720
- WO-A1-2015/045985
- WO-A1-2015/045985
- WO-A1-2018/147367
- JP-A- 2007 038 289
- JP-A- 2015 062 936
- JP-A- 2015 062 936
- JP-A- 2017 035 735
- JP-A- 2017 035 735

## Description

### FIELD OF THE INVENTION

The present invention relates to a rolling composite roll comprising an outer layer having excellent wear resistance and surface-roughening resistance, and a tough inner layer having excellent wear resistance, which are integrally fused to each other, and its production method.

### BACKGROUND OF THE INVENTION

As a hot-rolling work roll, a centrifugally cast composite roll in which a centrifugally cast outer layer of a wear-resistant iron-based alloy is integrally fused to a tough inner layer of ductile cast iron is widely used. In a centrifugally cast composite roll, damage such as wear and surface roughening, etc. occurs on an outer layer of the roll due to thermal and mechanical load by contact with a rolled strip, deteriorating the surface quality of the rolled strip.

When the outer layer is damaged to some extent, the roll is exchanged. The roll taken out of the mill is reassembled in the mill, after damaged portions are removed by grinding from the outer layer. The removal of damaged portions by cutting and grinding from an outer layer of a roll is called "grinding." After a work roll is ground from its initial diameter to the minimum diameter usable for rolling (discard diameter) to remove damages, it is discarded. A diameter in a range from the initial diameter to the discard diameter is called a "usable roll diameter." Frequent grinding for removing damages of the outer layer lowers productivity by the interruption of rolling, and reduces the usable roll diameter. Accordingly, an outer layer in the usable roll diameter range desirably has excellent wear resistance, failure resistance and surface-roughening resistance to avoid large damages.

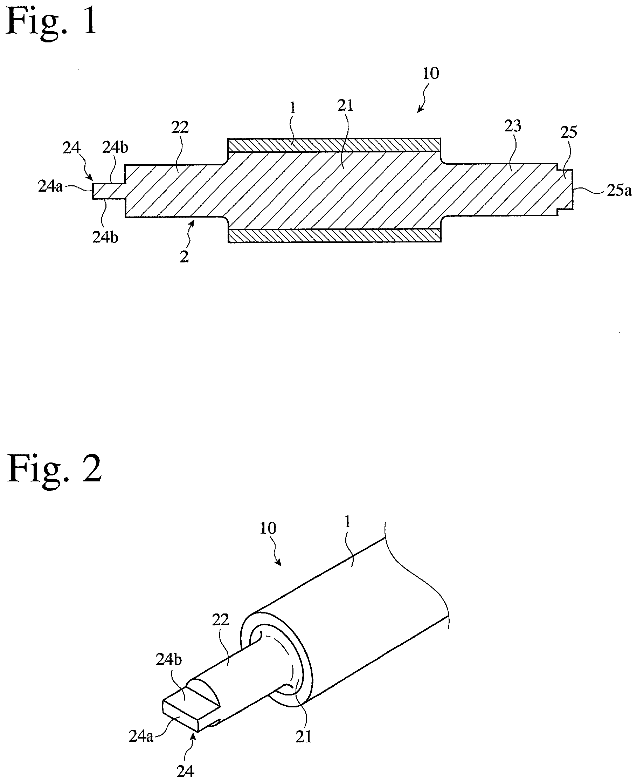

As shown in Fig. 1, a composite roll 10 comprises an outer layer 1 coming into contact with a strip to be rolled, and an inner layer 2 fused to an inner surface of the outer layer 1. The inner layer 2 is made of a material different from that of the outer layer 1, and constituted by a core portion 21 fused to the outer layer 1, and a drive-side shaft portion 22 and a free-side shaft portion 23 integrally extending from both ends of the core portion 21. An end portion of the drive-side shaft portion 22 is integrally provided with a clutch portion 24 for transmitting a driving torque. An end portion of the free-side shaft portion 23 is integrally provided with a projection 25 necessary for handling the composite roll 10. The clutch portion 24 has an end surface 24a, and a pair of flat cut-out surfaces 24b, 24b engageable with a driving means (not shown). The projection 25 has an end surface 25a.

The shaft portions 22, 23 are usually used without repair, until the outer layer 1 is discarded after repeated grinding. However, during the life span of the outer layer 1 expanded in recent years, the damages of the shaft portions may reach such a level as making rolling difficult, resulting in premature discarding. Particularly the drive-side shaft portion 22 having the clutch portion 24 for transmitting a driving torque from a motor receives high stress by sliding with a coupling and a driving torque from the motor, so that it is highly likely damaged. Accordingly, it is a portion most requiring durability.

To solve the above problem of damage in shaft portions, the applicant proposed by JP 2015-62936 A a centrifugally cast composite roll comprising a drive-side shaft portion having improved wear resistance while maintaining machinability of a free-side shaft portion. This centrifugally cast composite roll comprises a centrifugal casting outer layer and an inner layer of ductile cast iron integrally fused to the outer layer, the outer layer being made of an Fe-based alloy having a chemical composition comprising by mass at least 3.0-10.0% of Cr, 2.0-10.0% of Mo, and 5.8-10.0% of V; the inner layer comprising a core portion fused to the outer layer, and shaft portions integrally extending from both ends of the core portion; the total amount of Cr, Mo and V in end portions of both shaft portions being 0.15-2.0% by mass; and the difference in the total amount of Cr, Mo and V between one shaft portion and the other shaft portion being 0.2% by mass or more.

Though the wear resistance of the shaft portions is improved in the centrifugally cast composite roll of JP 2015-62936 A, further improvement is desired to be adapted to the recently expanded life span of the roll body. EP3050636 discloses a centrifugally cast, hot-rolling composite roll comprising an outer layer formed by a centrifugal casting method, and an inner layer made of ductile cast iron and integrally fused to the outer layer; the outer layer having a chemical composition comprising by mass 1-3% of C, 0.4-3% of Si, 0.3-3% of Mn, 1-5% ofNi, 2-7% of Cr, 3-8% of Mo, 3-7% of V, and 0.01-0.12% of B, the balance being Fe and inevitable impurities. The hot-rolling composite roll comprises an outer layer formed by a centrifugal casting method, and an inner layer integrally fused to the outer layer. The inner layer made of ductile cast iron is constituted by a core portion fused to the outer layer, and shaft portions integrally extending from both ends of the core portion. To improve the wear resistance of ductile cast iron forming the inner layer, it is usually effective to add carbide-forming elements such as V, Nb, etc. to the ductile cast iron, to crystallize hard carbides (MC carbides, etc.) different from cementite. However, these carbide-forming elements hinder the graphitization of the ductile cast iron, reducing the elongation of the ductile cast iron. Accordingly, increase in the life spans of the shaft portions has been limited.

### OBJECT OF THE INVENTION

Accordingly, an object of the present invention is to provide a rolling composite roll comprising an outer layer having excellent wear resistance and surface-roughening resistance, and a tough inner layer having excellent wear resistance, which are integrally fused to each other, and its production method.

### SUMMARY OF THE INVENTION

As a result intensive research in view of the above object, the inventors have found that by transferring proper amounts of hard MC carbides from the outer layer to at least one of the shaft portions of graphite cast iron, without adding carbide-forming elements such as V, etc. to an inner layer melt except for those coming from raw materials such as scraps, etc., the shaft portions can be provided with extremely improved wear resistance without deteriorating toughness. The present invention has been completed based on such finding.

The invention is disclosed in the appended claims.

### EFFECTS OF THE INVENTION

The present invention can provide a rolling composite roll having remarkably improved wear resistance without lowering the toughness of shaft portions, because an outer layer has excellent wear resistance and surface-roughening resistance, and because at least one of the shaft portions of graphite cast iron contains large amounts of hard MC carbides with no graphitization-hindering, carbide-forming elements such as V, etc. added to an inner layer melt. The shaft portions having remarkably improved wear resistance provides the rolling roll with a longer life span, contributing to rolling cost reduction.

### BRIEF DESCRIPTION OF DRAWINGS

Fig. 1 is a schematic cross-sectional view showing a composite roll.
Fig. 2 is a partial perspective view showing a clutch portion side of the composite roll of Fig. 1.
Fig. 3(a) is an exploded cross-sectional view showing an example of casting molds used for producing the rolling composite roll of the present invention.
Fig. 3(b) is a cross-sectional view showing an example of casting molds used for producing the rolling composite roll of the present invention.
Fig. 4 is a photomicrograph of an unetched cross section of the shaft portion of the rolling composite roll of Example 3, which was ground by alumina abrasive grains.

### DESCRIPTION OF THE PREFERRED EMBODIMENTS

The present invention will be explained in detail below without intention of restriction. Various modifications may be made within the scope of the present invention.

What is described simply as "%" means "% by mass," unless otherwise mentioned.

### [1] Rolling composite roll

The rolling composite roll of the present invention comprises an outer layer coming into contact with a strip to be rolled, and an inner layer fused to an inner surface of the outer layer (see Figs. 1 and 2).

(A) Outer layer

The outer layer constituting the rolling composite roll of the present invention is made of an Fe-based alloy consisting of by mass 1-3% of C, 0.3-3% of Si, 0.1-3% of Mn, 0.1-5% of Ni, 1-7% of Cr, 1-8% of Mo, 5-10% of V, 0.005-0.15% of N, and 0% or more and less than 0.05% of B, optionally 0.1-3% by mass of Nb, 0.1-5% by mass of W and/or at least one selected from the group consisting by mass of 0.1-5% of Co, 0.01-0.5% of Zr, 0.005-0.5% of Ti, and 0.001-0.5% of Al, balance Fe and inevitable impurities.

### (1) Indispensable elements

### (a) C: 1-3% by mass

C is combined with V, Cr and Mo (and Nb and W if contained) to form hard carbides, contributing to improvement in the wear resistance of the outer layer. When C is less than 1% by mass, too small amounts of hard carbides are formed, failing to provide the outer layer with sufficient wear resistance. On the other hand, when C exceeds 3% by mass, excessive carbides are formed, providing the outer layer with lower toughness and decreased cracking resistance, thereby resulting in deep cracks by rolling, and thus large loss of the roll by grinding. The lower limit of the C content is preferably 1.5% by mass, more preferably 1.8% by mass. Also, the upper limit of the C content is preferably 2.6% by mass, more preferably 2.3% by mass.

### (b) Si: 0.3-3% by mass

Si deoxidizes the melt to reduce defects by oxides, is dissolved in the matrix to improve seizure resistance, and further increases the flowability of the melt to prevent casting defects. Less than 0.3% by mass of Si provides the melt with insufficient deoxidization and fluidity, resulting in a high percentage of defects. On the other hand, when Si exceeds 3% by mass, the alloy matrix becomes brittle, providing the outer layer with lower toughness. The lower limit of the Si content is preferably 0.4% by mass, more preferably 0.5% by mass. The upper limit of the Si content is preferably 2.0% by mass, more preferably 1.5% by mass.

### (c) Mn: 0.1-3% by mass

Mn has functions of not only deoxidizing the melt, but also fixing S as MnS. Because MnS having a lubricating function effectively prevents the seizure of a rolled strip, it is preferable to contain a desired amount of MnS. When Mn is less than 0.1% by mass, its effects are insufficient. On the other hand, more than 3% by mass of Mn does not provide further effects. The lower limit of the Mn content is preferably 0.2% by mass, more preferably 0.3% by mass. The upper limit of the Mn content is preferably 2.0% by mass, more preferably 1.5% by mass.

### (d) Ni: 0.1-5% by mass

Because Ni has a function of improving the hardenability of the matrix of the outer layer, Ni can prevent the formation of pearlite during cooling when added to a large composite roll, improving the hardness of the outer layer. Less than 0.1% by mass of Ni exhibits substantially no effects, while more than 5% by mass of Ni stabilizes austenite too much, hardly improving the hardness. The lower limit of the Ni content is preferably 0.2% by mass, more preferably 0.3% by mass, most preferably 0.5% by mass. The upper limit of the Ni content is preferably 3.0% by mass, more preferably 2.0% by mass.

### (e) Cr: 1-7% by mass

Cr is an element effective for forming the matrix composed of bainite or martensite to keep hardness, thereby maintaining the wear resistance of the outer layer. Less than 1% by mass of Cr exhibits insufficient effects, while more than 7% by mass of Cr decreases the toughness of the matrix. The lower limit of the Cr content is preferably 3.0% by mass, more preferably 3.5% by mass. The upper limit of the Cr content is preferably 6.5% by mass, more preferably 6.0% by mass.

### (f) Mo: 1-8% by mass

Mo is combined with C to form hard carbides (M₆C, M₂C), increasing the hardness of the outer layer, and improving the hardenability of the matrix. Mo also forms tough and hard MC carbides together with V and/or Nb, improving the wear resistance. Less than 1% by mass of Mo provides insufficient effects, while more than 8% by mass of Mo lowers the toughness of the outer layer. The lower limit of the Mo content is preferably 2% by mass, more preferably 3% by mass. The upper limit of the Mo content is preferably 7% by mass, more preferably 6.5% by mass.

### (g) V:5.1-10% by mass

V is an element combined with C to form hard MC carbides. The MC carbides are the hardest carbides having Vickers hardness HV of 2500-3000. Less than 5% by mass of V forms an insufficient amount of MC carbides, resulting in lack of the amount of MC carbides entering the inner layer, thus providing insufficient effects of improving the damage resistance of a clutch portion. On the other hand, when V exceeds 10% by mass, MC carbides having a low specific gravity than that of the iron melt are concentrated in an inner side of the outer layer by a centrifugal force during centrifugal casting, generating the extreme radial segregation of MC carbides, and likely forming large MC carbides which make the alloy structure coarser and cause surface roughening during rolling. The lower limit of the V content is 5.1% by mass preferably 5.2% by mass. The upper limit of the V content is preferably 9.0% by mass, more preferably 8.0% by mass.

### (h) N: 0.005-0.15% by mass

N is effective to make carbides finer, but it makes the outer layer brittle when it exceeds 0.15% by mass. The upper limit of the N content is preferably 0.1% by mass. To achieve a sufficient effect of making carbides finer, the lower limit of the N content is 0.005% by mass, preferably 0.01% by mass.

### (i) B: 0% or more and less than 0.05%

B is dissolved in carbides to lower the melting points of the carbides, and B-dissolved carbides tend to be last solidified portions, likely remaining as shrinkage voids depending on a casting design. This function is remarkable when B exceeds 0.05% by mass, likely restricting roll materials and a casting design. The upper limit of the B content is preferably 0.04% by mass, more preferably 0.03% by mass.

### (2) Optional elements

The outer layer may further contain 0.1-3% by mass of Nb. Also, the outer layer may contain 0.1-5% by mass of W. Further, the outer layer may contain at least one selected from the group consisting by mass of 0.1-10% of Co, 0.01-0.5% of Zr, 0.005-0.5% of Ti, and 0.001-0.5% ofAl. The outer layer may further contain at least one selected from the group consisting of the second and third group elements in the Periodic Table.

### (a) Nb: 0.1-3% by mass

Like V, Nb is combined with C to form hard MC carbides. Nb added with V and Mo is dissolved in MC carbides to strengthen them, improving the wear resistance of the outer layer. Because Nb has a larger atomic weight than that of V, the specific gravities of V-based MC carbides smaller than that of the iron melt increase when Nb is dissolved therein. Accordingly, Nb acts to reduce the segregation of MC carbides due to a centrifugal force during centrifugal casting. Less than 0.1% by mass of Nb has only small contribution to the formation of MC carbides, with substantially no effect of increasing the amount of MC carbides entering the inner layer, so that it hardly increases the damage resistance of the clutch portion. On the other hand, when Nb exceeds 3% by mass, the amount of Nb-based MC carbides having larger specific gravities than that of the iron melt increases, likely causing their concentration and segregation on the surface side by a centrifugal force. The lower limit of the Nb content is preferably 0.2% by mass, more preferably 0.3% by mass. The upper limit of the Nb content is preferably 2.5% by mass, more preferably 2.2% by mass.

### (b) W: 0.1-5% by mass

W is combined with C to form hard carbides such as M₆C, etc., to contribute to improving the wear resistance of the outer layer. W is also dissolved in MC carbides to increase their specific gravities, thereby reducing their segregation. However, W exceeding 5% by mass increases M₆C carbides, resulting in an inhomogeneous structure, which causes surface roughening. Accordingly, W is 5% or less by mass if contained. On the other hand, less than 0.1% by mass of W provides insufficient effects. The upper limit of the W content is preferably 4% by mass, more preferably 3% by mass.

### (d) Co: 0.1-5% by mass

Co is dissolved in the matrix to increase the high-temperature hardness of the matrix, thereby improving the wear resistance and surface-roughening resistance of the outer layer. Less than 0.1% by mass of Co provides substantially no effects, while more than 5% by mass of Co leads to material cost increase without providing further improvement. The lower limit of the Co content is preferably 1% by mass, and the upper limit of the Co content is preferably 3% by mass, further preferably 2.0% by mass.

### (e) Zr: 0.01-0.5% by mass

Like V and Nb, Zr is combined with C to form MC carbides, improving the wear resistance of the outer layer. Zr also forms oxides acting as crystallization nuclei in the melt, making the solidified structure finer. Further, Zr increases the specific gravities of MC carbides, preventing their segregation. However, Zr exceeding 0.5% by mass forms undesirable inclusions. The upper limit of the Zr content is more preferably 0.3% by mass. To obtain sufficient effects, the lower limit of the Zr content is more preferably 0.02% by mass.

### (f) Ti: 0.005-0.5% by mass

Ti is combined with C and N to form hard granular compounds such as TiC, TiN or TiCN. Acting as nuclei for MC carbides, they make the dispersion of MC carbides homogeneous, contributing to improvement in the wear resistance and surface-roughening resistance of the outer layer. However, more than 0.5% by mass of Ti increases the viscosity of the melt, likely generating casting defects. The upper limit of the Ti content is more preferably 0.3% by mass, most preferably 0.2% by mass. To obtain sufficient effects, the lower limit of the Ti content is more preferably 0.01% by mass.

### (g) Al: 0.001-0.5% by mass

Al having high affinity for oxygen acts as a deoxidizer. Al is also combined with N and O to form oxynitrides, which are dispersed as nuclei in the melt, crystalizing fine MC carbides uniformly. However, more than 0.5% by mass of Al makes the outer layer brittle, while less than 0.001% by mass of Al provides insufficient effects. The upper limit of the Al content is more preferably 0.3% by mass, most preferably 0.2% by mass. To obtain sufficient effects, the lower limit of the Al content is more preferably 0.01% by mass.

### (f) Second and third group elements in Periodic Table: 0-0.1% or less in total by mass

The second and third group elements in the Periodic Table have not only high affinity for O and S, but also deoxidation and desulfurization functions, cleaning the melt and preventing casting defects. However, the addition of more than 0.1% by mass in total of the second and third group elements do not provide further effects, taking into consideration the usual amounts of O and S in the melt. The upper limit of their total amount is preferably 0.05% by mass, more preferably 0.03% by mass. The second and third group elements in the Periodic Table include Mg, Ca, Sr, Ba, La, Ce, etc.

### (3) Inevitable impurities

The balance of the composition of the outer layer is Fe and inevitable impurities. Among the inevitable impurities, P and S are preferably as little as possible because they deteriorate mechanical properties. Specifically, P is preferably 0.1% or less by mass, and S is preferably 0.05% or less by mass.

### (4) Structure

The structure of the outer layer comprises (a) MC carbides, (b) eutectic carbides in matrix grain boundaries, and (c) a matrix, the area ratio of MC carbides being 9-22%, and the area ratio of eutectic carbides in matrix grain boundaries being 2-10%. The matrix grain boundaries mean grain boundaries between the matrix structures. The eutectic carbides in matrix grain boundaries are M₂C, M₆C, M₇C₃, etc. The metal M is mainly at least one of Fe, Cr, Mo, V, Nb and W, and the percentages of the metal M, C and B are changeable depending on the composition. In the rolling composite roll of the present invention, the structure of the outer layer preferably contains no graphite. MC carbides are particularly granular and hard, remarkably effective for wear resistance. With 9-22% by area of MC carbides contained, the outer layer has higher wear resistance. The area ratio of MC carbides is more preferably 10-17%. The eutectic carbides in matrix grain boundaries supporting the matrix increase surface-roughening resistance by preventing the composition flow of the matrix under a rolling load.

### (B) Inner layer

The inner layer of the rolling composite roll of the present invention is made of graphite cast iron consisting of by mass 2.4-3.6% of C, 1.5-3.5% of Si, 0.1-2% of Mn, 0.1-2% of Ni, less than 0.7% of Cr, less than 0.5% of Mo, 0.05-1% of V, and 0.01-0.1% of Mg, optionally less than 0.5% of Nb, less than 0.7% W, the balance being Fe and inevitable impurities.

### (1) Indispensable elements

### (a) C: 2.4-3.6% by mass

C is dissolved in the matrix and crystallized as graphite. To crystallize graphite, the C content should be 2.4% or more by mass, though it deteriorates the mechanical properties of the inner layer when it exceeds 3.6% by mass. The lower limit of the C content is preferably 2.7% by mass, and the upper limit of the C content is preferably 3.5% by mass.

### (b) Si: 1.5-3.5% by mass

Si is an element necessary for crystallizing graphite. The Si content should be 1.5% or more by mass, though it deteriorates the mechanical properties of the inner layer when it exceeds 3.5% by mass. The lower limit of the Si content is preferably 1.7% by mass, and the upper limit of the Si content is preferably 3% by mass.

### (c) Mn: 0.1-2% by mass

Mn deoxidizes the melt, and is combined with S, an impurity, to form MnS, thereby preventing embrittlement by S. The Mn content should be 0.1% or more by mass, though it deteriorates the mechanical properties of the inner layer when it exceeds 2% by mass. The lower limit of the Mn content is preferably 0.15% by mass, and the upper limit of the Mn content is preferably 1.2% by mass.

### (d) Ni: 0.1-2% by mass

Ni is effective as an auxiliary element for graphitization. For graphitization, it should be 0.1% or more by mass, preferably 0.2% or more by mass. When the cast inner layer is fused to the outer layer, the inner surface of the outer layer is melted and mixed into the inner layer, so that the Ni content increases in the inner layer when the Ni content is higher in the outer layer than in the inner layer. Because the increased Ni content lowers a transformation temperature from an austenite phase at a high temperature to a pearlite phase predominant at room temperature, axial breakage is likely to occur in the outer layer being cooled after casting. Accordingly, the upper limit of Ni should be 2% by mass, and is preferably 1.8% by mass.

### (e) Cr: Less than 0.7% by mass

Cr is combined with C to form cementite, improving the wear resistance. However, too much Cr deteriorates the mechanical properties of the inner layer. When Cr is 0.7% or more by mass, the mechanical properties of the inner layer are deteriorated. The upper limit of the Cr content is preferably 0.5% by mass. Incidentally, the lower limit of the Cr content may be 0.05% by mass. Also, because Cr in the outer layer is mixed into the integrally fused inner layer, the amount of Cr entering from the outer layer should be taken into consideration. As a result, the Cr content in the inner layer melt should be set such that the Cr content in the integrally fused inner layer is less than 0.7% by mass. The upper limit of the Cr content is preferably 0.5% by mass.

### (f) Mo: Less than 0.7% by mass

Because Mo is a carbide-forming element hindering graphitization, its amount should be limited. Mo entering from the outer layer (its melted inner surface) into the inner layer by their integral fusion is contained in MC carbides, or forms M₂C carbides. The present invention is characterized by intentionally transferring Mo in the form of MC carbides from the outer layer into the inner layer, such that MC carbides enter the inner layer without remelting, improving the wear resistance of the inner layer. Therefore, the lower limit of the Mo content is preferably 0.05% by mass. On the other hand, 0.7% or more by mass of Mo extremely hinders graphitization, deteriorating the toughness of the inner layer. The upper limit of the Mo content is preferably 0.5% by mass.

### (g) V: 0.05-1% by mass

Because V is a strong carbide-forming element hindering graphitization, its amount should be limited. Most of V entering from the outer layer (its melted inner surface) into the inner layer by their integral fusion is in the form of MC carbides. The present invention is characterized by intentionally transferring MC carbides from the outer layer into the inner layer, such that MC carbides enter the inner layer without remelting, improving the wear resistance of the inner layer while suppressing the graphitization-hindering function of V To secure sufficient wear resistance of the inner layer, V should be 0.05% or more by mass. However, more than 1% by mass of V hinders graphitization too much. The lower limit of the V content is preferably 0.1% by mass, and the upper limit of the V content is preferably 0.7% by mass, further preferably 0.5% by mass.

### (h) Mg: 0.01-0.1% by mass

Mg induces the spheroidization of graphite, which drastically improves the toughness of the inner layer. For spheroidization, Mg should be 0.01% or more by mass, and sufficient at 0.1% or less by mass. The lower limit of the Mg content is preferably 0.015% by mass, and the upper limit of the Mg content is preferably 0.05% by mass.

### (2) Optional elements

### (a) Nb: Less than 0.5% by mass

Because Nb is a strong carbide-forming element hindering graphitization like V, its amount should be limited. When Nb is contained in the outer layer, most of Nb entering from the outer layer (its melted inner surface) into the inner layer by their integral fusion is in the form of MC carbides. More than 0.5% by mass of Nb hinders graphitization too much. The upper limit of the Nb content is preferably 0.4% by mass. The Nb content is preferably 0.02% or more by mass, because the MC carbides improve the wear resistance of the inner layer.

### (b) W: Less than 0.7% by mass

W is a carbide-forming element hindering the graphitization of the inner layer. When W is contained in the outer layer, W in the outer layer (its melted inner surface) inevitably enters the inner layer integrally fused to the outer layer. To suppress the hindering of graphitization, W should be less than 0.7% by mass. The upper limit of the W content is preferably 0.6% by mass.

### (2) Inevitable impurities

The balance of the composition of the inner layer are substantially Fe and inevitable impurities. Among the inevitable impurities, P, S and N deteriorate the mechanical properties. Accordingly, their amounts are preferably as little as possible. Specifically, P is preferably 0.1% or less by mass, S is preferably 0.05% or less by mass, and N is preferably 0.07% or less by mass. Also, B is preferably less than 0.05% by mass because it hinders the graphitization of the inner layer. Al is preferably 0.1% or less by mass. Other inevitable impurities include elements such as Zr, Co, Ti, etc., if any in the outer layer.

### (3) Structure

The inner layer of the rolling composite roll of the present invention is made of graphite cast iron having crystallized graphite. Graphite cast iron softer than white cast iron containing no graphite exhibits high toughness. The graphite cast iron is classified by the shape (spheroidal, flaky, granular, etc.) of graphite. Particularly, spheroidal graphite cast iron having crystallized spheroidal graphite is preferable for the inner layer of the roll because of large toughness.

The area ratio of graphite in the graphite cast iron is preferably 2-12%. When the area ratio of graphite is less than 2%, the amount of cementite is too large, resulting in insufficient elongation, likely causing the breakage of the roll by a thermal or mechanical load during rolling. Because the upper limit of carbon is 3.6% by mass, the upper limit of the area ratio of graphite is 12%.

The rolling composite roll of the present invention is characterized in that at least one shaft portion of the inner layer contains 200/cm² or more of hard MC carbides having equivalent circle diameters of 5 µm or more. The hard MC carbides are V-based MC carbides containing Mo, etc. (MC carbides based on V and/or Nb and containing Mo, W, etc. when containing Nb and W). Because hard MC carbides have higher hardness than that of alumina abrasive grains, they remain in the form of projections on a flat surface of a test piece taken from the inner layer after successive grinding with diamond and alumina abrasive grains. Accordingly, the hard MC carbides can be confirmed by microscopic observation.

When a drive-side shaft portion 22 having a clutch portion 24 contains 200/cm² or more of hard MC carbides having equivalent circle diameters of 5 µm or more, the clutch portion 24 can be protected from damage. The damage of the clutch portion 24 is mainly caused by wear by scratching with particles such as scales, etc. contained in grease during sliding with a coupling. Hard MC carbides having equivalent circle diameters of less than 5 µm are easily detached together with an ambient structure, exhibiting a small effect of improving the wear resistance of the shaft portion. Larger numbers of hard MC carbides having equivalent circle diameters of 5 µm or more are more advantageous for wear resistance, and they should be 200/cm² or more. The number of hard MC carbides having equivalent circle diameters of 5 µm or more is preferably 300-5000/cm². More than 5000/cm² of hard MC carbides having equivalent circle diameters of 5 µm or more make the inner layer too hard, failing to secure enough toughness. The upper limit of the equivalent circle diameters of the hard MC carbides is preferably 100 µm, more preferably 50 µm, further preferably 30 µm, most preferably 20 µm.

Because the other shaft portion, a free-side shaft portion 23 having no clutch portion 24, has no portion sliding with the coupling though it is integrally provided with a projection 25 necessary for handling, etc., it is not required to have such wear resistance as required for the drive-side portion.

The number of hard MC carbides having equivalent circle diameters of 5 µm or more in the other shaft portion is preferably 20-80% of that in one shaft portion. When the number of hard MC carbides having equivalent circle diameters of 5 µm or more in the other shaft portion is 20% or more of that in one shaft portion, the other shaft portion has improved wear resistance. When the number of hard MC carbides having equivalent circle diameters of 5 µm or more in the other shaft portion is 80% or less of that in one shaft portion, the other shaft portion has improved machinability, resulting in low production cost. The number of hard MC carbides having equivalent circle diameters of 5 µm or more in the other shaft portion is preferably 30% or more, more preferably 40% or more, of that in one shaft portion. The number of hard MC carbides having equivalent circle diameters of 5 µm or more in the other shaft portion is preferably 70% or less, more preferably 60% or less, of that in one shaft portion.

### (C) Intermediate layer

Though the rolling composite roll of the present invention has been explained, an intermediate layer having an intermediate composition may be formed between the outer layer and the inner layer as a buffer layer for them. The thickness of the intermediate layer is preferably 10-30 mm.

### (D) Roll size

Though the size of the centrifugally cast composite roll of the present invention is not particularly restricted, the outer layer preferably has an outer diameter of 200-1300 mm, a roll body length of 500-6000 mm, and a usable thickness of 25-200 mm.

### [2] Production method of rolling composite roll

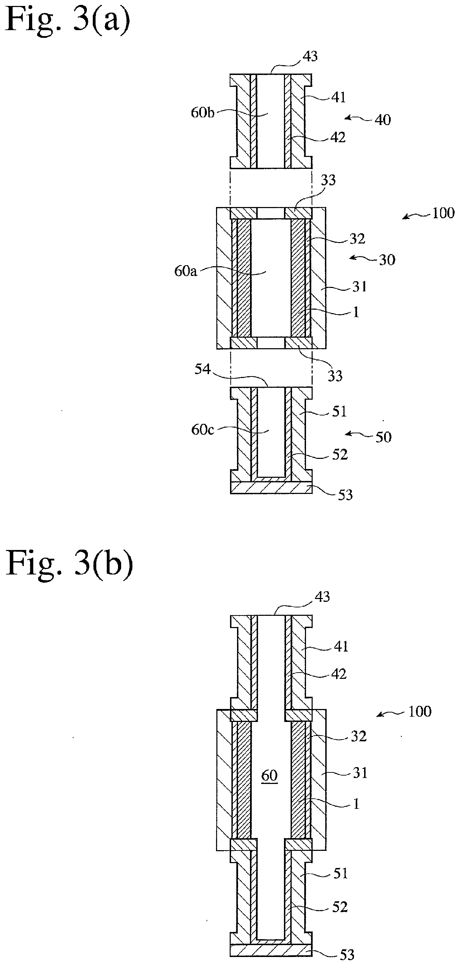

The rolling composite roll is preferably produced by the following specific method. Figs. 3(a) and 3(b) show an example of static casting molds for casting an inner layer 2 after centrifugally casting an outer layer 1 in a centrifugal-casting cylindrical mold 30. This static casting mold 100 comprises a cylindrical casting mold 30 containing the outer layer 1 on its inner surface, and an upper mold 40 and a lower mold 50 attached to upper and lower ends of the cylindrical casting mold 30. The cylindrical casting mold 30 comprises a casting mold body 31, a sand mold 32 formed inside the casting mold body 31, and a sand mold 33 attached to lower ends of the casting mold body 31 and the sand mold 32. The upper mold 40 is constituted by a casting mold body 41, and a sand mold 42 formed inside the casting mold body 41. The lower mold 50 is constituted by a casting mold body 51, and a sand mold 52 formed inside the casting mold body 51. The lower mold 50 is provided with a bottom plate 53 for holding an inner layer melt. An inner surface of the outer layer 1 in the cylindrical casting mold 30 constitutes a cavity 60a for forming a core portion 21 of the inner layer 2. The upper mold 40 has a cavity 60b for forming a free-side shaft portion 23 of the inner layer 2, and the lower mold 50 has a cavity 60c for forming a drive-side shaft portion 22 of the inner layer 2. A centrifugal casting method using the cylindrical casting mold 30 may be horizontal, inclined or vertical.

When a melt for the outer layer 1 poured into the rotating centrifugal-casting cylindrical mold 30 is centrifugally cast, a flux comprising oxides based on Si, etc. is preferably added to form a flux layer having a thickness of 0.5-30 mm on the inner surface of the outer layer, thereby preventing the oxidation of the inner surface of the solidified outer layer.

As shown in Figs. 3(a) and 3(b), the cylindrical casting mold 30 having the centrifugally cast outer layer 1 is vertically attached onto the lower mold 50 for forming the drive-side shaft portion 22, and the upper mold 40 for forming the free-side shaft portion 23 is attached onto the cylindrical casting mold 30, to assemble the static casting mold 100 for forming the inner layer 2, in which the cavity 60a inside the outer layer 1 communicates with the cavity 60b of the upper mold 40 and the cavity 60c of the lower mold 50 to constitute the cavity 60 for integrally forming the entire inner layer 1.

After confirming that the inner surface temperature of the outer layer (surface temperature of a flux layer) inside the static casting mold 100 is in a range of 950°C or higher and lower than 1000°C, the inner layer melt at 1330-1400°C is cast into the cavity 60 through an upper opening 43 of the upper mold 40. A surface of the melt in the cavity 60 is gradually elevated from the lower mold 50 to the upper mold 40 while pushing up the flux layer, thereby casting the inner layer 2 having the drive-side shaft portion 22, the core portion 21 and the free-side shaft portion 23 integrally with the outer layer 1. The composition of the inner layer melt comprises by mass 2.5-3.6% of C, 1.7-3.3% of Si, 0.1-1.5% of Mn, 0.1-2% of Ni, 0-0.5% of Cr, 0-0.5% of Mo, and 0.01-0.1% of Mg, the balance being Fe and inevitable impurities.

The inner surface of the outer layer 1 is remelted to the depth of 10-30 mm by heat from the cast inner layer melt. By the remelting of the inner surface of the outer layer 1, Cr, Mo and V (and further Nb and W, if any) in the outer layer 1 migrate into the inner layer 2. There are more hard MC carbides having equivalent circle diameters of 5 µm or more in the drive-side shaft portion 22 formed in the lower mold 50 than in the free-side shaft portion 23 formed in the upper mold 40. As a result, the number of hard MC carbides having equivalent circle diameters of 5 µm or more at least in the drive-side shaft portion 22 is 200/cm² or more. Why there are more hard MC carbides in the drive-side shaft portion 22 than in the free-side shaft portion 23 is presumably due to the fact that the convection level of the inner layer melt differs between the lower mold 50 and the upper mold 40.

When the inner surface temperature of the outer layer is lower than 950°C, the inner surface (up to the depth of 10-30 mm) of the outer layer is not sufficiently remelted even if the inner layer melt at 1330-1400°C is poured, resulting in insufficient mixing of hard MC carbides from the outer layer into the inner layer. As a result, defects tend to be generated in their boundary, and at least one shaft portion cannot have 200/cm² or more of hard MC carbides having equivalent circle diameters of 5 µm or more. To have sufficient hard MC carbides, the lower limit of the inner surface temperature of the outer layer is preferably 960°C from the same point of view. When the inner surface temperature of the outer layer is 1000°C or higher, the inner surface of the outer layer is melted too much when the inner layer melt is cast, hindering the graphitization of the inner layer. From the same point of view, the upper limit of the inner surface temperature of the outer layer is preferably 990°C.

When the casting temperature of the inner layer melt is lower than 1330°C, the inner surface of the outer layer cannot be sufficiently remelted even if the inner surface temperature of the outer layer is 950°C or higher and lower than 1000°C, resulting in insufficient mixing of hard MC carbides from the outer layer into the inner layer. As a result, at least one shaft portion cannot have 200/cm² or more of hard MC carbides having equivalent circle diameters of 5 µm or more. From the same point of view, the casting temperature of the inner layer melt is preferably 1340°C or higher, further preferably 1350°C or higher. Also, when the inner layer melt higher than 1400°C is cast, hard MC carbides in the outer layer disappear in the inner layer melt while the inner surface of the outer layer is remelted. As a result, at least one shaft portion cannot have 200/cm² or more of hard MC carbides having equivalent circle diameters of 5 µm or more. From the same point of view, the casting temperature of the inner layer melt is preferably 1390°C or lower, further preferably 1380°C or lower.

An intermediate layer may be formed by centrifugal casting on the inner surface of the centrifugally cast outer layer, as a buffer layer for the inner layer. Though the inner surface of the outer layer is remelted by the cast intermediate layer, MC carbides contained in the outer layer are not remelted but remain in the intermediate layer, because a small amount of an intermediate layer melt is not enough to remelt the inner layer. Particularly MC carbides having small specific gravities are concentrated in the inner surface of the intermediate layer by a centrifugal force. With the inner surface temperature of the intermediate layer set at the inner surface temperature of the outer layer according to the conditions of the present invention, the inner layer can be cast such that the inner surface of the intermediate layer is remelted, thereby mixing MC carbides from the intermediate layer into the inner layer.

The present invention will be explained in further detail by Examples below, without intention of restricting the present invention thereto.

### Examples 1-7 and Comparative Examples 1-4

With a cylindrical casting mold 30 (inner diameter: 800 mm, and length: 2500 mm) having the structure shown in Fig. 3(a) set in a horizontal centrifugal-casting apparatus, a melt having a composition providing the outer layer composition shown in Table 3 (the balance: Fe and inevitable impurities) was centrifugally cast to form an outer layer 1. A Si-based oxide flux was added during centrifugal casting, to form a flux layer as thick as 5 mm on the inner surface of the outer layer. Thereafter, the cylindrical casting mold 30 containing the outer layer 1 (thickness: 90 mm) formed on its inner surface and the flux layer (thickness: 5 mm) formed on the inner surface of the outer layer 1 was erected and vertically attached onto a hollow lower mold 50 (inner diameter:600 mm, and length: 1500 mm) for forming a drive-side shaft portion 22. A hollow upper mold 40 (inner diameter: 600 mm, and length: 2000 mm) for forming a free-side shaft portion 23 was vertically attached onto the cylindrical casting mold 30, to constitute a static casting mold 100 shown in Fig. 3(b).

After the inner surface temperature of the outer layer 1 (the surface temperature of the flux layer) measured by an radiation thermometer was judged to reach the temperature shown in Table 2, a ductile cast iron melt having the composition shown in Table 1 (the balance: Fe and inevitable impurities) was poured at the temperature shown in Table 2 into the cavity 60 of the static casting mold 100 through its upper opening 43. With a surface of the ductile cast iron melt elevated successively from the lower mold 50 for forming the drive-side shaft portion 22 to the cylindrical casting mold 30 (outer layer 1) for forming the core portion 21, and then to the upper mold 40 for forming the free-side shaft portion 23, the flux was removed from the inner surface of the outer layer, so that the inner surface of the outer layer was partially melted by the heat of the inner layer melt, thereby forming an integral inner layer 2 having the drive-side shaft portion 22, the core portion 21 and the free-side shaft portion 23 in the outer layer 1.

**Table 1-1**

| No. | Composition of Inner Laver Melt (% by mass) | | | | | | | | | | |
|---|---|---|---|---|---|---|---|---|---|---|---|
| | C | Si | Mn | Ni | Cr | Mo | V | Nb | W | Mg | B |
| Example 1 | 3.32 | 2.61 | 0.48 | 1.20 | 0.05 | 0.02 | 0.02 | - | - | 0.041 | - |
| Example 2 | 3.30 | 2.62 | 0.49 | 1.23 | 0.06 | 0.02 | 0.01 | - | - | 0.039 | - |
| Example 3 | 3.28 | 2.60 | 0.49 | 1.21 | 0.05 | 0.03 | 0.01 | - | - | 0.043 | - |
| Example 4 | 3.27 | 2.58 | 0.51 | 1.25 | 0.05 | 0.03 | 0.01 | - | - | 0.037 | - |
| Example 5 | 3.29 | 2.63 | 0.48 | 1.20 | 0.05 | 0.03 | 0.02 | - | - | 0.040 | - |
| Example 6 | 3.30 | 2.59 | 0.50 | 1.24 | 0.05 | 0.02 | 0.02 | - | - | 0.043 | - |
| Example 7 | 3.31 | 2.56 | 0.51 | 1.24 | 0.05 | 0.02 | - | - | - | 0.040 | - |
| Com. Ex. 1 | 3.31 | 2.61 | 0.52 | 1.22 | 0.06 | 0.03 | 0.02 | - | - | 0.042 | - |
| Com. Ex. 2 | 3.32 | 2.63 | 0.50 | 1.23 | 0.05 | 0.02 | 0.01 | - | - | 0.041 | - |
| Com. Ex. 3 | 3.30 | 2.64 | 0.49 | 1.22 | 0.05 | 0.02 | 0.01 | - | - | 0.044 | - |
| Com. Ex. 4 | 3.33 | 2.60 | 0.51 | 1.23 | 0.05 | 0.02 | 0.01 | - | - | 0.042 | - |

**Table 1-2**

| No. | Composition of Melt (% by mass) | | | |
|---|---|---|---|---|
| | N | S | Ti | Al |
| Example 1 | 0.003 | 0.01 | - | 0.01 |
| Example 2 | 0.003 | 0.01 | - | 0.01 |
| Example 3 | 0.003 | 0.01 | - | 0.01 |
| Example 4 | 0.003 | 0.01 | - | 0.01 |
| Example 5 | 0.003 | 0.01 | - | 0.01 |
| Example 6 | 0.003 | 0.01 | - | 0.01 |
| Example 7 | 0.003 | 0.01 | - | 0.01 |
| Com. Ex. 1 | 0.003 | 0.01 | - | 0.01 |
| Com. Ex. 2 | 0.003 | 0.01 | - | 0.01 |
| Com. Ex. 3 | 0.003 | 0.01 | - | 0.01 |
| Com. Ex. 4 | 0.003 | 0.01 | - | 0.01 |

After the complete solidification of the inner layer 2, the static casting mold 100 was disassembled to take out a composite roll, which was then tempered at 500°C. Thereafter, the outer layer 1, the drive-side shaft portion 22 and the free-side shaft portion 23 were machined to predetermined shapes to form a clutch portion 24 and a projection 25. The compositions of the outer layer 1 and the inner layer 2 in each composite roll thus obtained are shown in Table 3. The composition of the inner layer 2 was analyzed in the drive-side shaft portion 22.

**Table 2**

| No. | Inner Surface Temperature of Outer Layer (°C) | Casting Temperature of Inner Layer Melt (°C) |
|---|---|---|
| Example 1 | 952 | 1340 |
| Example 2 | 970 | 1355 |
| Example 3 | 985 | 1393 |
| Example 4 | 973 | 1381 |
| Example 5 | 980 | 1378 |
| Example 6 | 991 | 1351 |
| Example 7 | 955 | 1339 |
| Com. Ex. 1 | 777 | 1415 |
| Com. Ex. 2 | 1041 | 1453 |
| Com. Ex. 3 | 922 | 1489 |
| Com. Ex. 4 | 930 | 1311 |

**Table 3-1**

| No. | | Compositions of Outer and Inner Layers of Composite Roll (% by mass) | | | | | | | | | | |
|---|---|---|---|---|---|---|---|---|---|---|---|---|
| | | C | Si | Mn | Ni | Cr | Mo | V | Nb | W | Mg | B |
| Ex. 1 | Outer Layer | 1.89 | 0.80 | 0.72 | 0.51 | 4.82 | 6.28 | 5.53 | - | - | - | 0.001 |
| | Inner Layer | 3.28 | 2.56 | 0.45 | 1.15 | 0.31 | 0.26 | 0.31 | - | - | 0.022 | - |
| Ex. 2 | Outer Layer | 1.90 | 0.82 | 0.70 | 0.55 | 4.83 | 6.31 | 5.21 | 0.44 | 0.10 | - | 0.002 |
| | Inner Layer | 3.28 | 2.55 | 0.48 | 1.17 | 0.25 | 0.30 | 0.25 | 0.05 | 0.01 | 0.023 | - |
| Ex. 3 | Outer Layer | 1.92 | 0.81 | 0.73 | 0.53 | 4.88 | 6.27 | 5.53 | 0.30 | 0.11 | - | 0.001 |
| | Inner Layer | 3.20 | 2.51 | 0.47 | 1.12 | 0.52 | 0.63 | 0.57 | 0.05 | 0.01 | 0.021 | - |
| Ex. 4 | Outer Layer | 1.89 | 0.85 | 0.72 | 0.50 | 4.78 | 6.34 | 5.67 | 0.51 | 0.10 | - | 0.027 |
| | Inner Layer | 3.16 | 2.47 | 0.55 | 1.16 | 0.47 | 0.56 | 0.49 | 0.06 | 0.01 | 0.023 | - |
| Ex. 5 | Outer Layer | 1.88 | 0.82 | 0.73 | 0.52 | 4.87 | 6.26 | 5.50 | 0.38 | 0.11 | - | 0.030 |
| | Inner Layer | 3.18 | 2.47 | 0.51 | 1.13 | 0.46 | 0.52 | 0.54 | 0.05 | 0.01 | 0.022 | - |
| Ex. 6 | Outer Layer | 1.87 | 0.84 | 0.75 | 0.52 | 4.89 | 6.45 | 5.65 | 0.64 | 0.10 | - | 0.034 |
| | Inner Layer | 3.20 | 2.49 | 0.55 | 1.18 | 0.45 | 0.50 | 0.50 | 0.07 | 0.01 | 0.023 | - |
| Ex. 7 | Outer Layer | 2.28 | 0.79 | 0.40 | 0.57 | 5.35 | 5.68 | 6.80 | 0.81 | 0.20 | - | 0.001 |
| | Inner Layer | 3.23 | 2.40 | 0.48 | 1.20 | 0.49 | 0.49 | 0.58 | 0.08 | 0.01 | 0.024 | - |
| Com. Ex. 1 | Outer Layer | 1.89 | 0.82 | 0.72 | 0.53 | 4.85 | 6.33 | 5.47 | 0.35 | 0.10 | - | 0.002 |
| | Inner Layer | 3.21 | 2.50 | 0.54 | 1.16 | 0.23 | 0.26 | 0.20 | 0.02 | 0.01 | 0.022 | - |
| Com. Ex. 2 | Outer Layer | 1.86 | 0.84 | 0.75 | 0.52 | 4.84 | 6.27 | 5.52 | 0.37 | 0.11 | - | 0.003 |
| | Inner Layer | 3.22 | 2.46 | 0.53 | 1.17 | 0.62 | 0.73 | 0.68 | 0.04 | 0.01 | 0.023 | - |
| Com. Ex. 3 | Outer Layer | 1.86 | 0.84 | 0.73 | 0.54 | 4.86 | 6.45 | 5.58 | 0.38 | 0.10 | - | 0.002 |
| | Inner Layer | 3.19 | 2.48 | 0.53 | 1.16 | 0.65 | 0.73 | 0.61 | 0.06 | 0.01 | 0.022 | - |
| Com. Ex. 4 | Outer Layer | 1.84 | 0.82 | 0.75 | 0.53 | 4.87 | 6.44 | 5.56 | 0.55 | 0.11 | - | 0.035 |
| | Inner Layer | 3.24 | 2.50 | 0.55 | 1.18 | 0.18 | 0.20 | 0.19 | 0.04 | 0.01 | 0.021 | - |

**Table 3-2**

| No. | | Compositions of Outer and Inner Layers of Composite Roll (% by mass) | | | |
|---|---|---|---|---|---|
| | | N | S | Ti | Al |
| Ex. 1 | Outer Layer | 0.05 | 0.01 | - | - |
| | Inner Layer | 0.003 | 0.01 | - | 0.01 |
| Ex. 2 | Outer Layer | 0.05 | 0.01 | - | - |
| | Inner Layer | 0.003 | 0.01 | - | 0.01 |
| Ex. 3 | Outer Layer | 0.06 | 0.01 | - | - |
| | Inner Layer | 0.003 | 0.01 | - | 0.01 |
| Ex. 4 | Outer Layer | 0.04 | 0.1 | - | - |
| | Inner Layer | 0.003 | 0.015 | - | 0.01 |
| Ex. 5 | Outer Layer | 0.05 | 0.01 | 0.03 | - |
| | Inner Layer | 0.003 | 0.01 | 0.001 | 0.01 |
| Ex. 6 | Outer Layer | 0.05 | 0.01 | - | 0.03 |
| | Inner Layer | 0.003 | 0.01 | - | 0.01 |
| Ex. 7 | Outer Layer | 0.05 | 0.01 | - | - |
| | Inner Layer | 0.003 | 0.01 | - | 0.01 |
| Com. Ex. 1 | Outer Layer | 0.05 | 0.01 | - | - |
| | Inner Layer | 0.003 | 0.01 | - | 0.01 |
| Com. Ex. 2 | Outer Layer | 0.05 | 0.01 | - | - |
| | Inner Layer | 0.003 | 0.01 | - | 0.01 |
| Com. Ex. 3 | Outer Layer | 0.05 | 0.01 | - | - |
| | Inner Layer | 0.003 | 0.01 | - | 0.01 |
| Com. Ex. 4 | Outer Layer | 0.05 | 0.01 | - | - |
| | Inner Layer | 0.003 | 0.01 | - | 0.01 |

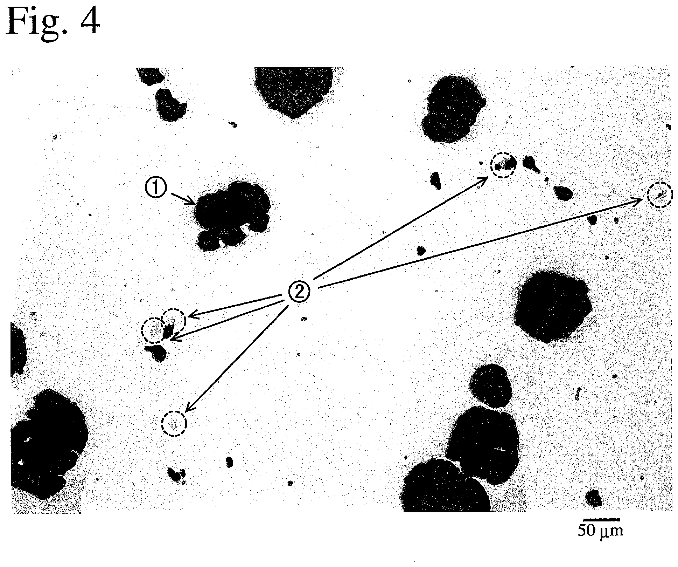

After successively ground with diamond and alumina abrasive grains, photomicrographs (magnification: 200 times) of both shaft portions 22, 23 of the inner layer 2 of each composite roll were taken in an unetched state, to count the number of hard MC carbides having equivalent circle diameters of 5 µm or more. Fig. 4 is a photomicrograph of the shaft portion of the rolling composite roll of Example 3. In Fig. 4, black portions shown by circles 1 are graphite, and gray portions encircled by broken lines shown by circles 2 are hard MC carbides having equivalent circle diameters of 5 µm or more. The number of hard MC carbides having equivalent circle diameters of 5 µm or more was counted in 10 arbitrary fields and averaged.

Further, the remelted inner surface thickness of the outer layer 1, and fusion in a boundary between the outer layer 1 and the inner layer 2 were observed by ultrasonic inspection. The remelted inner surface thickness of the outer layer 1 was calculated by subtracting the thickness of the outer layer measured by ultrasonic inspection from the thickness (90 mm) of the outer layer before casting the inner layer. The number of hard MC carbides having equivalent circle diameters of 5 µm or more in both shaft portions 22, 23, the remelted depth of the outer layer 1, and fusion in the boundary between the outer layer 1 and the inner layer 2 are shown in Table 4.

**Table 4**

| No. | Thickness of Remelted Inner Surface of Outer Layer (mm) | Hard MC Carbides ⁽¹⁾ | | Boundary between Outer Layer and Inner Layer |
|---|---|---|---|---|
| | | Drive-Side Shaft Portion | Free-Side Shaft Portion | |
| Example 1 | 13 | 311 | 186 | Good |
| Example 2 | 15 | 466 | 298 | Good |
| Example 3 | 25 | 699 | 522 | Good |
| Example 4 | 20 | 485 | 373 | Good |
| Example 5 | 23 | 522 | 410 | Good |
| Example 6 | 19 | 447 | 336 | Good |
| Example 7 | 12 | 326 | 224 | Good |
| Com. Ex. 1 | 6 | 124 | 93 | Defective |
| Com. Ex. 2 | 42 | 186 | 75 | Defective |
| Com. Ex. 3 | 40 | 124 | 37 | Good |
| Com. Ex. 4 | 6 | 112 | 47 | Good |

| | | | | |
|---|---|---|---|---|
| Note: (1) The number of hard MC carbides having equivalent circle diameters of 5 µm or more (unit: /cm²). | | | | |

In Examples 1-7, the inner surface temperature of the outer layer (surface temperature of the flux) before casting the inner layer melt was in a range of 950°C or higher and lower than 1000°C, and the casting temperature of the inner layer melt was in a range of 1330-1400°C. As a result, the remelted inner surface thickness of the outer layer integrally fused to the inner layer was in a range of 10-30 mm, indicating sound fusion of the outer layer to the inner layer without defects in their boundary. Also, at least one (clutch portion) of the drive-side shaft portion and the free-side shaft portion of the inner layer contained 200/cm² or more of hard MC carbides having equivalent circle diameters of 5 µm or more, exhibiting excellent wear resistance, and thus improved durability.

In Comparative Example 1, the inner surface temperature of the outer layer was as too low as 777 °C, and the casting temperature of the inner layer melt was as too high as 1415 °C. As a result, the remelted inner surface thickness of the outer layer was small with defects in a boundary between the outer layer and the inner layer, and the number of hard MC carbides having equivalent circle diameters of 5 µm or more was less than 200/cm² in both shaft portions.

In Comparative Example 2, the inner surface temperature of the outer layer was as too high as 1041 °C, and the casting temperature of the inner layer melt was also as too high as 1453°C. As a result, the remelted inner surface thickness of the outer layer was as too large as 40 mm, and the flux came off from the inner surface, resulting in defects in the boundary between the outer layer and the inner layer. Also, because the casting temperature of the inner layer melt was too high, hard MC carbides disappeared, so that the number of hard MC carbides having equivalent circle diameters of 5 µm or more was less than 200/cm² in both shaft portions.

In Comparative Example 3, the inner surface temperature of the outer layer was as too low as 922°C, and the casting temperature of the inner layer melt was as too high as 1489°C. As a result, hard MC carbides disappeared despite a good boundary between the outer layer and the inner layer, and the number of hard MC carbides having equivalent circle diameters of 5 µm or more was less than 200/cm² in both shaft portions.

In Comparative Example 4, the inner surface temperature of the outer layer was as too low as 930°C, and the casting temperature of the inner layer melt was also as too low as 1311 °C. As a result, the remelted inner surface thickness of the outer layer was as too small as 5 mm, and the number of hard MC carbides mixed into the inner layer by the remelted inner surface of the outer layer was too small.

## Claims

1. A composite roll for rolling comprising an outer layer (1) and an inner layer (2) integrally fused to each other; **characterized in that**
said outer layer is made of an Fe-based alloy consisting of by mass 1% to 3% of C, 0.3% to 3% of Si, 0.1% to 3% of Mn, 0.1% to 5% of Ni, 1% to 7% of Cr, 1% to 8% of Mo, 5.1% to 10% of V, 0.005% to 0.15% of N, and 0% or more and less than 0.05% of B, optionally 0.1 to 3% by mass of Nb, 0.1 to 5% by mass of W, and/or at least one selected from the group consisting of, by mass, 0.1 to 5% of Co, 0.01 to 0.5% of Zr, 0.05 to 0.5% of Ti, and 0.001 to 0.5% of Al, 0-0.1% of at least one of the second or third group elements in the Periodic Table, the balance being Fe and inevitable impurities;
said inner layer is made of graphite cast iron consisting of by mass 2.4% to 3.6% of C, 1.5% to 3.5% of Si, 0.1% to 2% of Mn, 0.1% to 2% of Ni, less than 0.7% of Cr, less than 0.7% of Mo, 0.05% to 1% of V, and 0.01% to 0.1% of Mg, optionally less than 0.5% by mass of Nb, and less than 0.7% by mass of W, the balance being Fe and inevitable impurities; and
said inner layer comprises a core portion fused to said outer layer and shaft portions integrally extending from both ends of said core portion, at least one of said shaft portions containing 200/cm² or more of hard MC carbides having equivalent circle diameters of 5 µm or more,
wherein said outer layer contains 9% to 22% by area of MC carbides, and 2% to 10% by area of eutectic carbides in matrix grain boundaries, all measured with methods as of the description.

2. A method for producing the composite roll for rolling recited in claim 1, **characterized in that** said method comprises
(1) centrifugally casting said outer layer in a rotating centrifugal-casting cylindrical mold; and then
(2) casting a melt for said inner layer at 1330°C to 1400°C into a hollow portion of said outer layer when the inner surface temperature of said outer layer is 950°C or higher and lower than 1000°C, to remelt the inner surface of said outer layer to the depth of 10 mm to 30 mm.

3. The method for producing a composite roll for rolling according to claim 2, wherein the inner surface temperature of said outer layer is 960°C to 990°C when the melt for said inner layer is cast.

4. The method for producing a composite roll for rolling according to claim 2 or 3, wherein the melt for said inner layer has a composition consisting of by mass 2.5% to 3.6% of C, 1.7% to 3.3% of Si, 0.1% to 1.5% of Mn, 0.1% to 2% of Ni, 0% to 0.5% of Cr, 0% to 0.5% of Mo, and 0.01% to 0.1% of Mg, the balance being Fe and inevitable impurities.

## Patentansprüche

1. Verbundwalze zum Walzen, beinhaltend eine äußere Schicht (1) und eine innere Schicht (2), die einstückig miteinander verschmolzen sind; **dadurch gekennzeichnet, dass**
die äußere Schicht aus einer Fe-basierten Legierung besteht, die in Massen% aus 1% bis 3% C, 0 , 3% bis 3% Si, 0,1% bis 3% Mn, 0,1% bis 5% Ni, 1% bis 7% Cr, 1% bis 8% Mo, 5,1% bis 10% V, 0,005% bis 0,15% N, und 0% oder mehr und weniger als 0,05% B, optional 0,1 bis 3 Massen% Nb, 0,1 bis 5 Massen% W, und/oder wenigstens eines, ausgewählt aus der Gruppe, die nach Masse aus 0,1 bis 5% Co, 0,01 bis 0,5% Zr, 0,05 bis 0,5% Ti, und 0,001 bis 0,5% Al, 0-0,1% an wenigstens einem der Elementen der zweiten oder dritten Gruppe des Periodensystems besteht, mit dem Rest Fe und unvermeidliche Verunreinigungen;
die innere Schicht aus Graphit-Gusseisen besteht, das nach Masse aus 2,4% bis 3,6% C, 1,5% bis 3,5% Si, 0,1% bis 2% Mn, 0,1% bis 2% Ni, weniger als 0,7% Cr, weniger als 0,7% Mo, 0,05% bis 1% V, und 0,01% bis 0,1% Mg, optional weniger als 0,5 Massen% Nb, und weniger als 0,7 Massen% W, mit dem Rest Fe und unvermeidliche Verunreinigungen; und
die innere Schicht einen mit der äußeren Schicht verschmolzenen Kernbereich und Schaftbereiche aufweist, die sich einstückig von beiden Enden des Kernbereichs erstrecken, wobei wenigstens einer der Schaftbereiche 200/cm² oder mehr an harten MC-Carbiden Äquivalentkreis-Durchmessern von 5 µm oder mehr aufweist,
wobei die äußere Schicht 9% bis 22% nach Fläche an MC-Carbiden aufweist, und 2% bis 10% nach Fläche eutektische Carbide in Matrixkorngrenzen, alle gemessen mit den Verfahren wie in der Anmeldung.

2. Verfahren zum Herstellen der in Anspruch 1 angegebenen Verbundwalze zum Walzen, **dadurch gekennzeichnet, dass** das Verfahren beinhaltet
(1) Schleudergießen der äußeren Schicht in einer rotierenden Schleudergussform; und dann
(2) Gießen einer Schmelze für die innere Schicht bei 1330°C bis 1400°C in einen hohlen Bereich der äußeren Schicht, wenn die Temperatur der Innenoberfläche der äußeren Schicht 950°C oder höher und niedriger als 1000°C liegt, um die Innenoberfläche der äußeren Schicht bis zur Tiefe von 10 mm bis 30 mm aufzuschmelzen.

3. Verfahren zum Herstellen der Verbundwalze zum Walzen gemäß Anspruch 2, wobei die Temperatur der Innenoberfläche der äußeren Schicht 960°C bis 990°C beträgt, wenn die Schmelze für die innere Schicht gegossen wird.

4. Verfahren zum Herstellen der Verbundwalze zum Walzen gemäß Anspruch 2 oder 3, wobei die Schmelze für die innere Schicht eine Zusammensetzung hat, die nach Masse aus 2,5% bis 3,6% C, 1,7% bis 3,3% Si, 0,1% bis 1,5% Mn, 0,1% bis 2% Ni, 0% bis 0,5% Cr, 0% bis 0,5% Mo, und 0,01% bis 0,1% Mg besteht, mit dem Rest Fe und unvermeidliche Verunreinigungen.

## Revendications

1. Cylindre composite pour laminage comprenant une couche externe (1) et une couche interne (2) fusionnées intégralement l'une à l'autre; **caractérisé en ce que**
ladite couche externe est constituée d'un alliage à base de Fe constitué en masse de 1 % à 3 % de C, 0,3 % à 3 % de Si, 0,1 % à 3 % de Mn, 0,1 % à 5 % de Ni, 1 % à 7 % de Cr, 1 % à 8 % de Mo, 5,1 % à 10 % de V, 0,005 % à 0,15 % de N, et 0 % ou plus et moins de 0,05 % de B, éventuellement de 0,1 à 3 % en masse de Nb, 0,1 à 5 % en masse de W, et/ou au moins un élément choisi dans le groupe constitué, en masse, de 0,1 à 5 % de Co, 0,01 à 0,5 % de Zr, 0,05 à 0,5 % de Ti, et 0,001 à 0,5 % de Al, 0 à 0,1 % d'au moins l'un parmi les éléments du deuxième ou troisième groupe du tableau périodique, le reste étant du Fe et des impuretés inévitables;
ladite couche interne est constituée de fonte de graphite constituée, en masse, de 2,4 % à 3,6 % de C, 1,5 % à 3,5 % de Si, 0,1 % à 2 % de Mn, 0,1 % à 2 % de Ni, moins de 0,7 % de Cr, moins de 0,7 % de Mo, 0,05 % à 1 % de V, et 0,01 % à 0,1 % de Mg, et éventuellement moins de 0,5 % en masse de Nb, et moins de 0,7 % en masse de W, le reste étant constitué de Fe et d'impuretés inévitables ; et
ladite couche interne comprend une partie centrale fusionnée à ladite couche externe et des parties d'arbre s'étendant de façon solidaire à partir des deux extrémités de ladite partie centrale, au moins l'une desdites parties d'arbre contenant 200/cm² ou plus de carbures MC durs ayant des diamètres de cercle équivalents de 5 µm ou plus,
dans lequel ladite couche externe contient 9 % à 22 % en surface de carbures MC, et 2 % à 10 % en surface de carbures eutectiques dans des joints de grains de matrice, tous mesurés avec des procédés selon la description.

2. Procédé de production du cylindre composite pour laminage selon la revendication 1, **caractérisé en ce que** ledit procédé comprend
(1) la coulée par centrifugation de ladite couche externe dans un moule cylindrique rotatif pour coulée centrifuge; et puis
(2) la coulée d'une masse fondue pour ladite couche interne à 1330 °C à 1400 °C dans une partie creuse de ladite couche externe lorsque la température de la surface interne de ladite couche externe est supérieure ou égale à 950 °C et inférieure à 1000 °C, pour refondre la surface interne de ladite couche externe jusqu'à la profondeur de 10 mm à 30 mm.

3. Procédé de production d'un cylindre composite pour laminage selon la revendication 2, dans lequel la température de surface interne de ladite couche externe est de 960 °C à 990 °C lorsque la masse fondue pour ladite couche interne es coulée.

4. Procédé de production d'un cylindre composite pour laminage selon la revendication 2 ou 3, dans lequel la masse fondue pour ladite couche interne a une composition constituée en masse de 2,5 % à 3,6 % de C, 1,7 % à 3,3 % de Si, 0,1 % à 1,5 % de Mn, 0,1 % à 2 % de Ni, 0 % à 0,5 % de Cr, 0 % à 0,5 % de Mo, et 0,01 % à 0,1 % de Mg, le reste étant constitué de Fe et d'impuretés inévitables.
